# EUROPEAN PATENT APPLICATION

(11) **EP 1 074 443 A2**
(43) Date of publication of application: **07.02.2001**
(21) Application number: 00116389.8
(22) Date of filing: 28.07.2000
(51) Int. Cl.: B60S 3/06

(54) **Car wash equipment with improved control system for the operation of the brushes and car washing method attained with such equipment**

(30) Priority: 04.08.1999 IT MI991762
(71) Applicant: CECCATO S.p.A., I-36041 Montecchio Maggiore (Vicenza) (IT)
(72) Inventor: Pillon, Pierangelo, 36040 Brendola (Vicenza) (IT)
(74) Representative: Rapisardi, Mariacristina

(57) **Abstract**

Car wash equipment that uses brushes driven by electric motors, wherein means are foreseen for controlling the nominal or maximum torque value of the respective electric motor so as to exert on the brushes a lower force than the normal washing force for at least a predetermined portion of the length of the vehicle to be washed and inside which an obstacle such as a wing mirror, an antenna, a spoiler or alike is provided. With respect to traditional car washes, the car wash according to the present invention provides the advantage of limiting the variation of the normal operation of the brushes exclusively in correspondence of the location of the projecting part and proportionally to the dimensions thereof.

## Description

### Field of application

The present invention relates to a car wash equipment in general, provided with an improved system for controlling the brush operation.

The invention also relates to the method realised with this equipment.

A car wash equipment of the type referred to in the invention comprises rotating brushes which, by interfering with the vehicle surface, carry out its washing.

These brushes are arranged both on the horizontal plane and on the vertical plane, and they carry out the washing by putting the same into rotation and through the contact of their bristles with the surface of the vehicle to be washed.

In the design of this equipment, it must be kept into account that often the vehicle exhibits side projecting parts (wing mirrors, spoilers, antennas) which break the continuity of the surfaces to be cleaned.

In fact, these projecting parts hinder the movement of the brushes, both in the direction of rotation and in that of the relative translation between the same and the vehicle.

For this reason, types of equipment have been realised, operating with a reduction of the number of revolutions, or of the pressure of the brushes on the surface to be washed, so as to prevent them from damaging the vehicle with their movement, for example breaking an antenna or a wing mirror.

The main disadvantage of the above traditional car wash equipment consists in that the presetting of a smaller number of revolutions of the brushes, or of their lower rubbing ratio with the surfaces to be washed, causes the equipment to move apart from ideal operating conditions.

In fact, the surfaces ― at which these speed changes on the brush action are made to occur ― are not treated according to the ideal operating and design parameters of the equipment.

Moreover, the presetting, for example, of a smaller number of revolutions of the brushes for a fixed portion of their path reduces the equipment performances also where it is not necessary: that is to say, at the surface portions that, although being within the mentioned portion, yet are free from projecting parts.

Thus, the main purpose of the present invention is that of providing a new car wash equipment with rotating brushes which, unlike the known ones, should be capable of controlling the movement of the latter exactly at the projecting part, adjusting ― on the other hand ― the brush pressure and number of revolutions to the actual size or measure of the projecting part.

This and other purpose are attained with the car wash equipment and the method of the independent claims, respectively 1 and 6. Some preferred embodiments appear from the other claims.

With respect to known car wash equipment, the one according to the present invention offers the advantage of keeping the brush efficiency constant along the entire surface of the vehicle, changing the operating speed of the same only exactly in correspondence of the projecting parts, and on the basis of their actual size.

Moreover according to the invention, said change of the operating speed of the brushes occurs in an automatic way, specific for the type of projecting part to be overcome.

These and other purposes, features and advantages will appear from the following description of a preferred embodiment of the car wash equipment according to the present invention, illustrated as a non-limitative example in the attached drawings. In said drawings:
- Figure 1 shows a side view of the car wash equipment of the invention;
- Figures 2 and 3 respectively show a plan and front view of the equipment of figure 1;
- Figures 4 and 5 respectively show the pattern of the motor torque values and of the brush rotation speed of the equipment of figure 1.

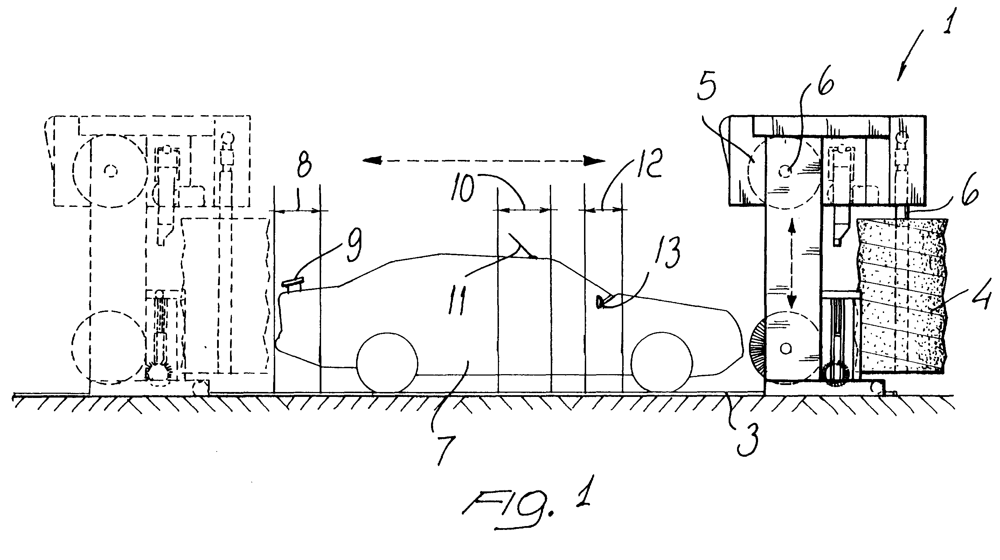

The equipment of the invention is indicated as a whole with reference numeral 1 in figure 1.

It consists of a frame 2 sliding on rails 3, carrying a plurality of brushes, respectively vertical 4 and horizontal 5.

These brushes essentially consist of a turnable shaft 6, which in turn carries a plurality of filaments, which spread with the rotation movement of the brushes so as to interfere with the surfaces of vehicle 7, thus cleaning them.

According to the invention, equipment 1 is provided with means realising the control of the maximum or nominal value of the torque of the electric motor that drives brushes 4 and 5.

In particular, said means consists of an electric or electronic circuit which carries out a slicing on the waveform of the power supply of the above motor, so as to reduce its torque also to up 50% of the nominal value.

In the practical operation of this equipment, the lengths are predetermined, for example those of portion 8 corresponding to the presence of spoilers 9 of the cars, of portion 10 for the antennas, and of portion 12 for wing mirrors 13.

In correspondence of these portions of path 8, 10 and 12, the reduction ― also up to 50% - of the nominal torque of the electric motor operating the brushes is programmed.

Thanks to said reduction of the nominal torque value, when the side brushes 4 enter in the portion of path 12, and the upper ones 5 in portions 8 and 10, their same interference with the projecting parts, respectively 13, 9 and 11, operates an automatic control over the motion of the brushes. In fact, for example, the friction stress between wing mirrors 13 and brushes 4 will cause a decrease in the number of revolutions of the latter. In said portion, in fact, the motor driving the brushes substantially is under-sized, thus it is not capable of imparting the same number of revolutions of the same pressure value of the brushes on the vehicle surface, as may usually be found in absence of projecting parts.

Thus, in substance, the above reduction of the motor torque value of equipment 1 actuates an automatic adjustment of the brush speed at the programmed portions of path, coinciding with the position of projecting parts.

Said automatic adjustment causes a reduction of the brush number of revolutions or of their pressure, which reduction is also proportional to the size of the projecting part they come into contact with. Therefore, for example, brushes 5, in the reduction of the nominal torque value of the electric motor, will exhibit a slight reduction of the rotation speed in correspondence of the portion of path 10 coinciding with the position of antenna 11 (small-sized projecting part), and a larger reduction of said speed in correspondence of spoiler 9, which is larger.

In particular it must be pointed out that, according to an important original feature of the present invention, the above changes to the operating speed of the brushes are limited to the exact location of the projecting part, and they are proportioned to its size.

In fact, for example, the entire portion 12 is affected by the reduction of the nominal torque value of the motor of brushes 4, but the changes to their operating speed are felt only in correspondence of the exact position of wing mirrors 13 of car 7.

This has the advantage that, according to the equipment and the method of the invention, the deviation from the ideal values of the brush operating speed is only limited to the projecting parts, and it does not affect also the surface portions surrounding the same projecting parts, as it happens in similar equipment of the prior art.

In a similar way, as already said above, the limitation of the brush number of revolutions is not "forced" anymore (as it happens in traditional car wash equipment) but it only occurs if needed due to the presence of the projecting part, and not to a fixed extent but correlated to the actual size of the projecting part.

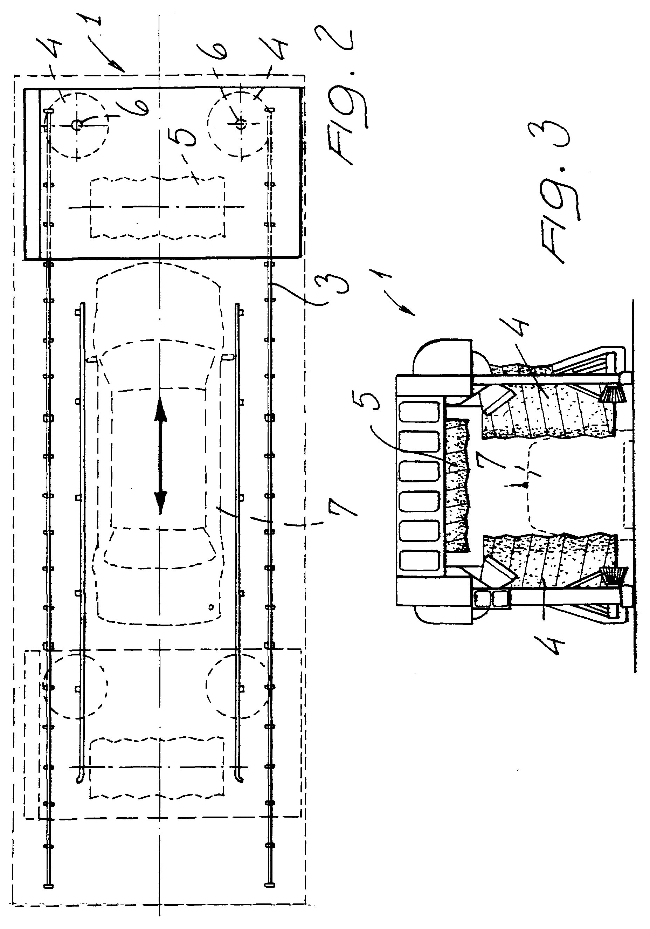

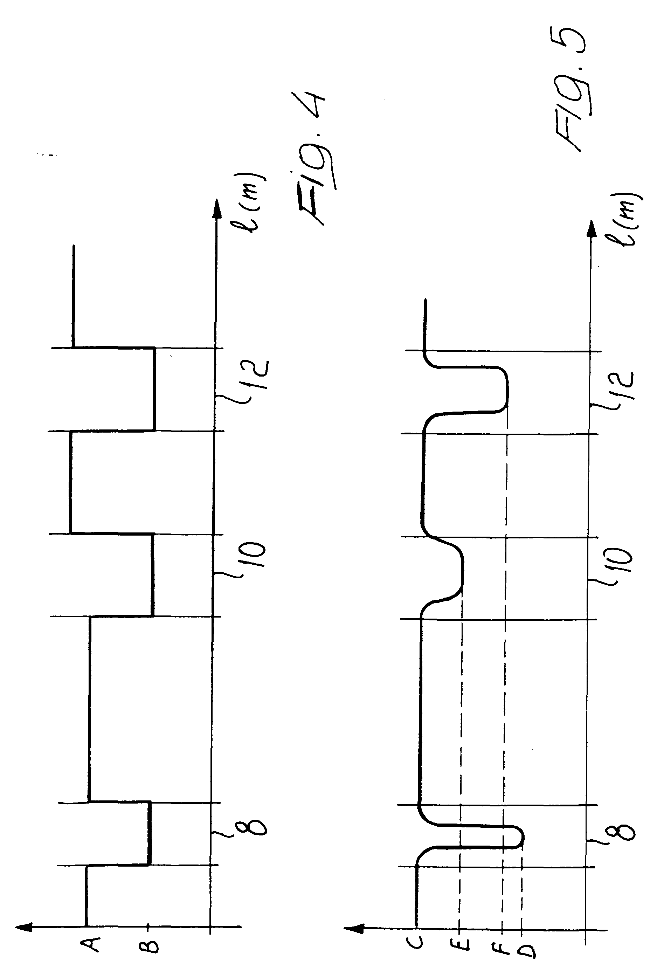

With reference to the example reported in figures 4 and 5, the equipment of the figure is provided with a driving motor of brushes 4 and 5, having nominal torque of A Kw.

In correspondence of the portions of path 8, 10 and 12 (respectively corresponding to the position of spoiler 9, of antenna 11 and of wing mirrors 13), the reduction of the motor torque is programmed to B Kw (figure 4).

As shown in figure 5, the nominal torque value (A Kw) of the motor corresponds to a rotation of the brushes equal to C revolutions/min (smooth surface, or without projecting parts, of vehicle 7).

When brushes 5 run into spoiler 9 (large obstacle), their rotation speed decreases to the value of D revolutions/min, whereas in correspondence of antenna 11 (small projecting part) and in correspondence of wing mirrors 13 (medium-size projecting part), brushes 5 and 4 respectively decrease to E revolutions/min and to F revolutions/min.

In general, the brush rotation undergoes a reduction from H% to K%.

What said with reference to the number of revolutions can be equally repeated for the other process parameters (usually the pressure exerted by the brushes on the surface of vehicle 7), without departing from the scope of the present invention. In particular, said reduction of the pressure value of the brushes on the vehicle surface can be attained by favouring the departure of the brush with respect to the vehicle, which departure can be obtained for example through the control of the electric motor torque.

Thanks to this system, the pressure is reduced with respect to that corresponding to the nominal torque value of the motor driving the brushes, from S% to Z%.

Finally, the actuation of the above electronic circuit can be provided also at least during the start or stop step of the brushes.

## Claims

1. Car wash equipment with brushes, wherein said brushes are driven by at least one electric motor, characterised in that it comprises means for controlling the nominal or maximum torque value of said electric motor so as to allow at least one brush, made rotate by said motor, to exert ― for at least a predetermined portion of the length of the vehicle to be washed ― a lower force than the normal washing force.

2. Equipment according to claim 1, characterised in that said control means is of the electric or electronic type.

3. Equipment according to claim 1 or 2, characterised in that said control means comprises an electronic circuit adapted to control said torque of the electric motor by operating ― through slicing ― on the waveform of the power supply of said motor.

4. Equipment according to one or more of the previous claims, characterised in that said electronic circuit is actuated at least during the start and/or stop step of said brush.

5. Equipment according to claim 1, characterised in that said torque of the electric motor into said predetermined portion of the vehicle is automatically reduced, in function of the requirements, also up to 50% of the maximum or nominal motor torque.

6. Method for realising a car wash with the equipment according to one or more of the previous claims, characterised in that it provides for the control of the nominal or maximum torque value of said electric motor so as to allow at least one brush, made rotate by said motor, to exert ― for at least a predetermined portion of the length of the vehicle to be washed ― a lower force than the normal washing force.

7. Method according to claim 6, characterised in that said at least one predetermined portion of the length of the vehicle to be washed corresponds to the presence of a projecting part, such as a wing mirror, an antenna, a spoiler or the like.

8. Method according to claims 6 or 7, characterised in that said control on the nominal torque value causes a consequent reduction of the number of revolutions or of the brush pressure, or of both, at the portion taken by said projecting part, comprised into said predetermined portion of the length of the vehicle to be washed.

9. Method according to one or more of the previous claims, characterised in that in correspondence of said portion of the length of the vehicle to be washed, the nominal torque value of the brush-lowering motor is reduced from X% to Y%.

10. Method according to one or more of the previous claims, characterised in that in correspondence of said projecting part the rotation speed of the brushes is reduced from H% to K% with respect to the nominal torque value.

11. Method according to one or more of the previous claims, characterised in that in correspondence of said projecting part, the brush pressure on the vehicle is reduced from S% to Z% with respect to the nominal torque value.
